Europäisches Patentamt

(19) European Patent Office

Office européen des brevets

(11) Veröffentlichungsnummer: **0 025 160**
**B1**

(12) **EUROPÄISCHE PATENTSCHRIFT**

(45) Veröffentlichungstag der Patentschrift:
**17.08.83**

(51) Int. Cl.³: **G 11 B 5/84**

(21) Anmeldenummer: **80105037.8**

(22) Anmeldetag: **25.08.80**

(54) **Verfahren zur Beschichtung von magnetischen, bindemittelhaltigen Dispersionen auf flexible Schichtträger.**

(30) Priorität: **06.09.79 DE 2936035**

(43) Veröffentlichungstag der Anmeldung:
**18.03.81 Patentblatt 81/11**

(45) Bekanntmachung des Hinweises auf die Patenterteilung:
**17.08.83 Patentblatt 83/33**

(84) Benannte Vertragsstaaten:
**DE FR GB**

(56) Entgegenhaltungen:
**DE-A-2 346 390**
**GB-A-902 838**
**Patents Abstracts of Japan Band 3, Nr. 6, 22. Januar 1979, Seite 96 E 85**

(73) Patentinhaber: **AGFA-GEVAERT Aktiengesellschaft, D-5090 Leverkusen 1 (DE)**

(72) Erfinder: **Pertzsch, Albert, Dipl.-Ing., Leutstettener Strasse 29, D-8000 München 71 (DE)**
Erfinder: **Rieger, Siegfried, Wallbergstrasse 16a, D-8031 Gröbenzell (DE)**
Erfinder: **Ankenbrand, Friedrich, Franz-Schuster-Strasse 11, D-8021 Neuried (DE)**

## Verfahren zur Beschichtung von magnetischen, bindemittelhaltigen Dispersionen auf flexible Schichtträger

Die Erfindung betrifft eine Vorrichtung zum Beschichten eines flexiblen Schichtträgers mit magnetischen, bindemittelhaltigen Dispersionen unter gleichzeitiger Beseitigung der am Rand des Schichtträgers auftretenden Verdickungen.

Zur Herstellung von Magnetbändern werden die bindemittelhaltigen, magnetische Teilchen enthaltenden Dispersionen mittels Rasterdruck-, Extrudergießverfahren und ähnlichen Beschichtungstechniken auf flexible Schichtträger aufgetragen. Man kann die Beschichtung mit magnetischen Dispersionen über die Breite des Schichtträgers hinaus erstrecken, um an den Rändern der Folien Schichtverdickungen — verursacht durch die Kohäsionskräfte der Dispersionen — zu vermeiden. In der amerikanischen Patentschrift 3 632 374 und in der deutschen Offenlegungsschrift 2 735 853 ist die Beschichtungsbreite gleich oder kleiner als die Breite des sich bewegenden Trägers, wobei zur Verhinderung der Bildung eines dickeren Überzuges an den Kanten der Leitstangen Abstreifbürsten vorgesehen sind. Um jegliche Verunreinigung der Transportwalzen für den Schichtträger und damit auch Produktionsstörungen zu vermeiden, wird im allgemeinen die Beschichtung der magnetisierbaren Dispersionen so eingestellt, daß die Breite der aufgetragenen Schicht etwas geringer ist als die Breite des Schichtträgers. In diesem Fall entstehen die erwähnten Schichtverdickungen oder Randwulste. Dies führt beim Aufwickeln der trockenen Bahn zu tellerförmigen Wickeln durch die Randerhöhung und beim Trennen der Bahn in schmale Magnetbänder zu unsauberen Bandkanten. Die bisherige Art der Beseitigung (US-A-3 632 374) der Randwulste mittels Bürsten und Schabern erfordert eine sehr exakte Höheneinstellung dieser Elemente und von Fall zu Fall eine entsprechende Reinigung derselben.

Der vorliegenden Erfindung liegt die Aufgabe zugrunde, ein wirksameres und wartungsfreies Verfahren zur Beseitigung der Randverdickungen beim Beschichten von magnetischen, bindemittelhaltigen Dispersionen auf flexible Schichtträger zu entwickeln. Erfindungsgemäß wird diese Aufgabe gelöst durch eine Vorrichtung zur Beschichtung von magnetischen, bindemittelhaltigen Dispersionen auf flexible Schichtträger, wobei der Auftrag der Dispersion in einer geringeren Breite als der des Schichtträgers erfolgt und wobei der dabei entstandene Randwulst unmittelbar nach der Auftragsstelle durch auf den Randbereich wirkende Glättmittel eingeebnet wird, dadurch gekennzeichnet, daß die Glättmittel von dem Streufeld eines aus einem Permanentmagneten und weichmagnetischen Leiterelementen bestehenden Kreises gebildet sind, der unterhalb des Schichtträgers angeordnet ist und dessen Spalt sich vom Begußrand nach der Kante des Schichtträgers zu in Laufrichtung des bewegten Schichtträgers in einem Winkel, der kleiner als 90° ist, erstreckt.

Aus der DE-A-2 346 390 ist es bekannt, unterhalb des Schichtträgers und unmittelbar gegenüber der Auftragsstelle der magnetischen Dispersion auf den Schichtträger einen Magneten anzuordnen, dessen Spalt sich senkrecht zur Laufrichtung des Schichtträgers und über dessen Breite hinaus sich erstreckt. Dieser Magnet dient zum Glätten der aufgetragenen Schicht. Während die Erfindung eine Vorzugsrichtung der Glättung aufweist, nämlich in Richtung des Spaltes zur Kante des Schichtträgers, weist die bekannte Einrichtung keine derartige Komponente auf.

Weitere Details der Erfindung werden an Hand eines Ausführungsbeispiels und von Zeichnungen näher erläutert, und zwar zeigen

Fig. 1 eine perspektivische Ansicht der Anordnung zur Beseitigung der Randverdickungen,

Fig. 2 eine Draufsicht auf die Anordnung des Permanentmagneten und seinen Leiterelementen in bezug auf die Bandlaufrichtung,

Fig. 3 einen Querschnitt auf den Verlauf des Randwulstes unter Anwendung eines magnetischen Kreises.

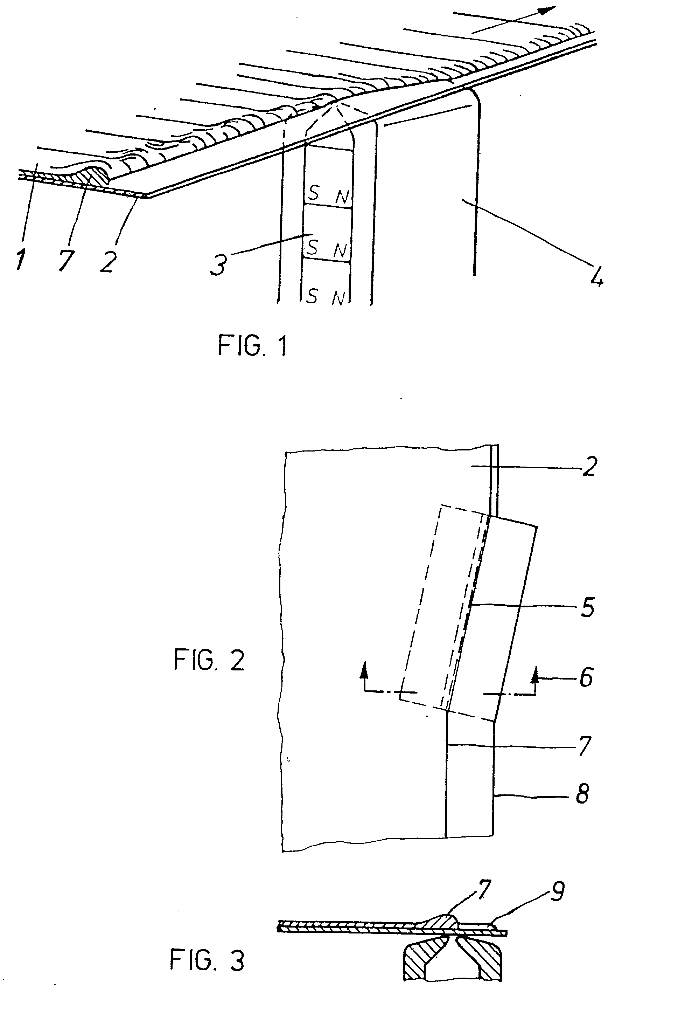

Wie Fig. 1 zeigt, wird die magnetische, bindemittelhaltige Dispersion (1) auf einen flexiblen Schichtträger (2), der im allgemeinen aus Polyethylenterephthalat besteht, aufgetragen mit Hilfe üblicher Gießvorrichtungen, zum Beispiel mit Extruder, Rasterdruckwalzen oder dergleichen. Unmittelbar nach der Begußauftragsstelle wird die Dispersion dem Streufeld eines magnetischen Kreises ausgesetzt, daß noch ein möglichst hoher Grad an Beweglichkeit gegeben ist. Der magnetische Kreis besteht aus Permanentmagneten (3) mit magnetischen Leiterelementen (4) hoher Sättigungsmagnetisierung, die als Polschuhe den Induktionsflusse. m Luftspalt zuführen, bzw. den magnetischen Kreis schließen. Das Material der Permanentmagneten besteht aus Aluminium-, Nickel-, Kobalt-Legierungen (Oerstit 400 K der Firma Thyssen Edelstahlwerke), aus Ferriten, z. B. Oxid 300 K oder aus Seltenerdmetall und Kobalt, z. B. Oerstit 1500. Für die Leiterelemente werden weichmagnetische Materialien, wie Dynamo- oder Transformatorenbleche verwendet. Der Spalt hat eine Breite bis maximal 2 mm, während seine Länge 10 bis 200 mm beträgt. Wichtig ist dabei, den Querschnitt und die Höhe der Leiterelemente so zu gestalten, daß das Material an den Spaltkanten gesättigt ist. Dies wird je nach verwendeten magnetischen Werkstoffen bei einem unterschiedlichen Querschnitt erreicht. Die magnetische Flußdichte im Wirkungsbereich der magnetischen Dispersion beträgt zwischen 0,05 und 0,18 Tesla gemessen mit dem Yohogawa-Gaußmeter Type 3251 und einer Axial-Meßsonde. Wie sowohl aus Fig. 1 und Fig. 2 hervorgeht, wird der magnetische Kreis unter dem Schichtträger angeordnet, und die Spaltmittellinie (5) verläuft in Laufrichtung (6) des Schichtträgers zwischen dem Randwulst (7) der aufgetragenen Dispersion und der Kante des Schichtträgers (8) in einem Winkel von 0,5° bis 10°. Wenn der Schichtträger durch das Streufeld in Laufrichtung (6) geführt wird, verschwindet die Überhöhung des Randwulstes (7) unter Ausdehnung der Dispersion auf normale Schichtdicke (9), wie es aus Fig. 3 ersichtlich ist.

### Patentansprüche

1. Vorrichtung zur Beschichtung von magnetischen, bindemittelhaltigen Dispersionen auf flexible Schichtträger, wobei der Auftrag der Dispersion in einer geringeren Breite als der des Schichtträgers erfolgt und wobei der dabei entstandene Randwulst unmittelbar nach der Auftragsstelle durch auf den Randbereich wirkende Glättmittel eingeebnet wird, dadurch gekennzeichnet, daß die Glättmittel von dem Streufeld eines aus einem Permanentmagneten und weichmagnetischen Leiterelementen bestehenden Kreises gebildet sind, der unterhalb des Schichtträgers angeordnet ist und dessen Spalt sich vom Begußrand nach der Kante des Schichtträgers zu in Laufrichtung des bewegten Schichtträgers in einem Winkel, der kleiner als 90° ist, erstreckt.

2. Vorrichtung nach Anspruch 1, dadurch gekennzeichnet, daß die Flußdichte des magnetischen Kreises zwischen 0,05 und 0,18 Tesla beträgt.

3. Vorrichtung nach Anspruch 1, dadurch gekennzeichnet, daß der Winkel zwischen Begußrand und Spaltmittellinie zwischen 0,5° und 10° beträgt.

4. Vorrichtung nach Anspruch 1, dadurch gekennzeichnet, daß die Spaltlänge zwischen 10 und 200 mm bei einer Spaltbreite von 0,5 bis 2 mm beträgt.

### Claims

1. An apparatus for coating magnetic, binder-containing dispersions onto flexible substrates, wherein the dispersion is applied in a width narrower than that of the substrate and wherein the border bead formed is levelled immediately downstream of the application point by smoothing agents acting on the border region, characterised in that the smoothing agents are formed by the stray field of a circuit which consists of a permanent magnet and soft magnetic conductor elements, which is arranged beneath the substrate and whose gap extends from the casting border toward the edge of the substrate in the direction of travel of the moving substrate at an angle of less than 90°.

2. An apparatus according to Claim 1, characterised in that the flux density of the magnetic circuit is between 0.05 and 0.18 Tesla.

3. An apparatus according to Claim 1, characterised in that the angle between the casting border and the central line of the gap is between 0.5 and 10°.

4. An apparatus according to Claim 1, characterised in that the gap length is between 10 and 200 mm with a gap width of 0.5 to 2 mm.

### Revendications

1. Dispositif d'enduction de supports souples avec des dispersions magnétiques contenant un liant, le dépôt de la dispersion s'effectuant sur une largeur inférieure à celle du support et le bourrelet marginal ainsi produit étant aplani immédiatement après le point de coulage, par des moyens qui agissent sur la zone marginale, ledit dispositif étant caractérisé en ce que les moyens de lissage sont formés par le champ de fuite d'un circuit constitué par un aimant permanent et des éléments conducteurs magnétiques doux, disposé sous le support et dont l'entrefer s'étend du bord de coulée au bord du support mobile, dans le sens de déplacement de ce dernier, suivant un angle inférieur à 90°.

2. Dispositif selon revendication 1, caractérisé en ce que l'induction du champ magnétique est comprise entre 0,05 et 0,18 T.

3. Dispositif selon revendication 1, caractérisé en ce que l'angle formé par le bord de coulage et l'axe de l'entrefer est compris entre 0,5° et 10°.

4. Dispositif selon revendication 1, caractérisé en ce que la longueur de l'entrefer est comprise entre 10 et 200 mm pour une largeur de 0,5 à 2 mm.

FIG. 1

FIG. 2

FIG. 3